# EUROPÄISCHE PATENTSCHRIFT

(11) **EP 0 862 780 B1**
(45) Veröffentlichungstag und Bekanntmachung des Hinweises auf die Patenterteilung: **13.10.1999**
(21) Anmeldenummer: 96945545.0
(22) Anmeldetag: 12.11.1996
(51) Int. Cl.: G21F 9/34

(54) **VERFAHREN ZUR VERWERTUNG KONTAMINIERTER METALLTEILE**
METHOD OF UTILIZING CONTAMINATED METAL PARTS
PROCEDE D'UTILISATION DE PIECES METALLIQUES CONTAMINEES

(30) Priorität: 22.11.1995 DE 19543549
(43) Veröffentlichungstag der Anmeldung: 09.09.1998
(73) Patentinhaber: SIEMENS AKTIENGESELLSCHAFT, 80333 München (DE)
(72) Erfinder: HAAS, Ernst, D-91054 Buckenhof (DE); NEUDERT, Nikolaus, D-90518 Altdorf (DE); HOFMANN, Roland, D-90542 Eckental (DE)
(86) Internationale Anmeldenummer: DE9602152
(87) Internationale Veröffentlichungsnummer: WO9719455

(56) Entgegenhaltungen:
- FR-A- 2 546 332
- GB-A- 2 178 357
- GB-A- 2 272 566
- PATENT ABSTRACTS OF JAPAN vol. 007, no. 061 (C-156), 15.März 1983 & JP 57 209630 A (DAIDO TOKUSHUKO KK;OTHERS: 06), 23.Dezember 1982, & DATABASE WPI Week 8306 Derwent Publications Ltd., London, GB; AN 83-13088k & JP 57 209 630 (DAIDO TOKUSHUKO ET AL.)
- DATABASE WPI Section Ch, Week 8612 Derwent Publications Ltd., London, GB; Class K07, AN 86-078382 XP002029207 & JP 61 026 898 A (HITACHI LTD) , 6.Februar 1986

## Beschreibung

Die Erfindung betrifft ein Verfahren zur Verwertung von Metallteilen, die radioaktiv kontaminiert sind, wobei die Metallteile aufgeschmolzen werden und ein Schlackebildner zugegeben wird, wodurch sich eine Schmelze und eine Schlacke bilden, die dann von der Schmelze abgetrennt wird.

Beim Abbau und auch beim Betrieb kerntechnischer Anlagen fällt in großem Umfang kontaminierter, metallischer Schrott an, der verwertet oder beseitigt werden muß. Es ist üblich, diesen Schrott einer Schmelzdekontamination zu unterziehen.

Ein Verfahren, das eine Schmelzdekontamination umfaßt, ist aus der DE 33 18 377 A1 bekannt. Dieses Verfahren sieht vor, daß das kontaminierte Metall aufgeschmolzen wird. Der Schmelze wird dann ein Schlackebildner oder Verschlackungsmittel zugesetzt. Es bildet sich eine Schlacke, die auf der Schmelze schwimmt. Die Stoffe, die die radioaktive Kontamination der Metallteile verursacht haben, sammeln sich in der Schlacke an. Das ist darauf zurückzuführen, daß die Löslichkeit der betreffenden Stoffe in der Schlacke größer ist als in der Schmelze. Durch diesen Prozeß gelangen die Stoffe, die die Kontamination verursacht haben, fast vollständig in die Schlacke, so daß die Schmelze fast vollständig frei von diesen Stoffen wird. Man erzielt auf diese Weise eine Dekontamination des Metalls. Nur die später von der Oberfläche der Schmelze abgezogene Schlacke, deren Volumen ein kleiner Teil des Gesamtvolumens aus Schmelze und Schlacke ist, muß einem Endlager zugeführt werden. Man benötigt also nur eine relativ kleine Endlagerkapazität. Die dekontaminierte Metallschmelze, deren Volumen deutlich größer als das Volumen der Schlacke ist, ist dekontaminiert und kann daher weiterverwendet werden. Beispielsweise können Metallformstücke hergestellt werden.

Aus der DE 33 18 377 A1 ist zu entnehmen, daß als Verschlakkungsmittel eine Mischung aus Kieselerde und Kalk zugesetzt wird. Diese Stoffe sind Rohstoffe, die für die Durchführung des bekannten Schmelzdekontamination-Verfahrens bereitgestellt werden müssen. Dadurch werden Kosten verursacht.

Ein Schmelzverfahren zur Verwertung radioaktiv kontaminierter Metallteile, bei dem die Metallteile zusammen mit Beton aufgeschmolzen werden, ist aus der JP-A-57209630 bekannt. Bei dem bekannten Verfahren bildet sich eine Schmelze und eine mit den radioaktiven Stoffen angereicherte Schlacke, die von der Schmelze abgetrennt werden kann.

Der Erfindung lag die Aufgabe zugrunde, ein Verfahren zur Verwertung von radioaktiv kontaminierten Metallteilen anzugeben, das wirtschaftlich ist und damit kostengünstig durchführbar ist.

Die Aufgabe wird nach der Erfindung dadurch gelöst, daß in einem Verfahren gemäß Patentanspruch 1 als Schlackebildner aus kontaminiertem Betonschutt gewonnene Betonstücke zugegeben werden.

Es hat sich nämlich herausgestellt, daß radioaktiv kontaminierte Betonstücke als Schlackebildner mindestens genauso gut geeignet sind wie eine Mischung aus Kieselerde und Kalk.

Mit dem Verfahren nach der Erfindung wird somit der Vorteil erzielt, daß statt der Rohstoffe, die Kosten verursachen, ein Abfallstoff, nämlich aus kontaminiertem Betonschutt gewonnene Betonstücke, als Schlackebildner eingesetzt werden können.

Betonschutt fällt stets beim Abriß von Betongebäuden an, so daß Betonstücke in großen Mengen zur Verfügung stehen. Außerdem braucht der Betonschutt dann vorteilhafterweise nicht entsorgt zu werden.

Falls die zu verwertenden Metallteile beim Abbau einer kerntechnischen Anlage anfallen, ist davcn auszugehen, daß beim Abbau dieser Anlage auch radioaktiv kontaminierter Betonschutt anfällt, aus dem die benötigten Betonstücke hergestellt werden können.

Damit wird der Vorteil erzielt, daß nicht nur ein Abfallstoff als Schlackebildner eingesetzt wird, sondern daß darüber hinaus dieser Abfallstoff am selben Ort zur Verfügung steht wie die zu verwertenden Metallteile.

Die Verwendung von aus kontaminiertem Betonschutt gewonnenen kontaminierten Betonstücken als Schlackebildner ist gefahrlos möglich. Die mit den kontaminierten Betonstücken eingebrachten die Kontamination tragenden Stoffe gelangen nämlich genauso wie die Stoffe, die die Kontamination der Metallteile verursacht haben, in die Schlacke. Alle radioaktiven Stoffe werden dann mit der Schlacke entfernt und einem Endlager zugeführt. Mit dem Einsatz von Betonstücken, die aus kontaminiertem Betonschutt gewonnen sind, wird nicht nur vorteilhafterweise ein geeigneter, kostenloser Schlackebildner zur Verfügung gestellt, sondern es wird darüber hinaus der besondere Vorteil erzielt, daß kontaminierter Betonschutt beseitigt und dabei nutzbringend eingesetzt wird.

Die Betonstücke können beispielsweise, bevor sie zugegeben werden, granuliert oder gemahlen werden. Als Schlackebildner werden dann zur Metallschmelze Betongranulat und/oder Betonmehl zugegeben. Es sind dabei unterschiedliche Korngrößen des Granulats möglich.

Mit dem Verfahren nach der Erfindung wird der Vorteil erzielt, daß aus kontaminiertem Betonschutt gewonnene Betonstücke bei der als solchen bekannten Schmelzdekontamination anstelle von Rohstoffen eingesetzt werden können.

Mit dem Verfahren nach der Erfindung wird der Vorteii erzielt, daß Betonstücke, die sogar radioaktiv kontaminiert sein können, bei der als solchen bekannten Schmelzdekontamination anstelle von Rohstoffen eingesetzt werden können.

## Patentansprüche

1. Verfahren zur Verwertung von Metallteilen, die radioaktiv kontaminiert sind, wobei die Metallteile aufgeschmolzen werden und als Schlackebildner Beton zugegeben wird, wodurch sich eine Schmelze und eine Schlacke bilden, die dann von der Schmelze abgetrennt wird,
**dadurch gekennzeichnet,** daß als Schlackebildner aus kontaminiertem Betonschutt gewonnene Betonstücke zugegeben werden.

2. Verfahren nach Anspruch 1,
**dadurch gekennzeichnet,** daß die Betonstücke, bevor sie zugegeben werden, granuliert oder gemahlen werden.

## Claims

1. Method of recycling metal parts which are radioactively contaminated, the metal parts being melted and concrete being added as a slag-forming agent, as a result of which a melt and a slag are formed, the latter then being separated from the melt, characterized in that pieces of concrete obtained from contaminated concrete rubble are added as the slag-forming agent.

2. Method according to Claim 1, characterized in that the pieces of concrete are granulated or ground before being added.

## Revendications

1. Procédé de valorisation de parties métalliques qui sont contaminées radicactivement, les parties métalliques étant fondues et du béton leur étant ajouté en tant que fondant de scorification, ce qui forme une masse fondue et une scorie qui est ensuite séparée de la masse fondue,
caractérisé en ce qu'il consiste à ajouter comme fondant de scorification des morceaux de béton provenant de gravats de béton contaminé.

2. Procédé de valorisation selon la revendication 1, caractérisé en ce que les morceaux de béton sont granulés ou broyés avant d'être ajoutés.
